# EUROPÄISCHE PATENTSCHRIFT

(11) **EP 0 905 662 B1**
(45) Veröffentlichungstag und Bekanntmachung des Hinweises auf die Patenterteilung: **12.05.2004**
(21) Anmeldenummer: 98203086.8
(22) Anmeldetag: 16.09.1998
(51) Int. Cl.: G08G 1/0968, G01C 21/20

(54) **Eingabesystem wenigstens für Orts- und/oder Strassennamen**
Input system for at least locality and street names
Système d'introduction de données pour au moins les noms de localités et de rues

(30) Priorität: 24.09.1997 DE 19742054
(43) Veröffentlichungstag der Anmeldung: 31.03.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Rühl, Hans-Wilhelm, Dipl.-Ing., Röntgenstrasse 24, 22335 Hamburg (DE)
(74) Vertreter: Volmer, Georg, Dipl.-Ing.

(56) Entgegenhaltungen:
- EP-A- 0 346 493
- EP-A- 0 768 638
- EP-A- 0 790 593
- WO-A-95/04340

## Beschreibung

Die Erfindung bezieht sich auf ein Eingabesystem wenigstens für Orts- und/oder Straßennamen mit einer Eingabeanordnung, mit einer wenigstens eine Orts- und/oder Straßenliste enthaltenen Datenquellenanordnung und mit einer Steueranordnung, die zur Suche von über die Eingabeanordnung eingegebenen Orts- oder Straßennamen in einer Orts- oder Straßenliste der Datenquellenanordnung vorgesehen ist.

Ein solches Eingabesystem wird beispielsweise in einem Navigationssystem verwendet, um einen Zielpunkt einzugeben. Das Eingabesystem enthält eine Eingabeanordnung, beispielsweise eine Tastatur, ein Trackball usw. Die Tastatur kann auch Teil einer Fernbedienung sein. Ein solches Navigationssystem ist beispielsweise das System "Carin 520", welches in einem Prospekt von November 1996 von Philips Car Systems beschrieben wird. Die Tastatur weist keine alphanumerischen Tasten auf, sondern ein Koordinateneingabesystem aus vier Richtungstasten und einer Bestätigungstaste. Damit wird beispielsweise der Ort eines Zielpunktes eingegeben, indem mit einem auf der Anzeigevorrichtung des Navigationssystems eingeblendeten Cursor ebenfalls eingeblendete Buchstaben nacheinander selektiert werden. Beispielsweise nach der Eingabe eines Ortes wird von einer Steueranordnung des Navigationssystems in einer CD-ROM (Teil einer Datenquellenanordnung), welche u.a. eine alphanumerisch sortierte Orts- und Straßenliste enthält, der eingegebene Ort gesucht, indem die alphabetisch sortierte Ortsliste sequentiell von Anfang der Liste durchsucht wird.

Aus dem Dokument EP-A-0 790 593 ist ein Verfahren und eine Vorrichtung zur Auswahl eines Zieles in einem Fahrzeugnavigationssystem bekannt. Bei der Auswahl werden eine Reihe verschiedener Listen-Darstellungen erzeugt, welche die Historie bei der Auswahl beispielsweise eines Ortsnamens anzeigen. Als Beispiel wird die Auswahl des Ortes "San Fransisco" angegeben. Nachdem dieser Ort einmal aus einer Ortsliste ausgewählt worden ist, erscheint der Ort "San Fransisco" bei der nächsten Benutzung der Ortsliste am Anfang der Ortsliste. Die eine Ortsliste ist somit umsortiert worden. Wenn ein weiterer Ort aus der Ortsliste ausgewählt worden ist (z.B. Sausalito), erscheint dieser bei der nächsten Benutzung der Ortsliste an der zweiten Stelle der umsortierten Ortsliste. Das bedeutet, das die eine Ortsliste nach der Auswahl eines Ortes jeweils umsortiert wird.

Das Dokument EP-A-0 346 4932 zeigt ein Fahrzeugnavigationssystem mit einem Spracheingabesystem.

Der Erfindung liegt die Aufgabe zugrunde, ein Eingabesystem zu schaffen, welches eine einfachere Eingabe von Orts- und/oder Straßennamen ermöglicht.

Die Aufgabe der Erfindung wird durch ein Eingabesystem der eingangs genannten Art dadurch gelöst,
daß die Datenquellenanordnung außer einer ersten Orts- und/oder Straßenliste mit alphabetisch sortierten Orts- und/oder Straßennamen wenigstens eine zweite Ortsund/oder Straßenliste mit nach einem Häufigkeitskriterium sortierten Orts- und/oder Straßennamen enthält,
daß die zweite Orts- und/oder Straßenlisten wenigstens einen Teil der Orts- und/oder Straßennamen der ersten Orts- und/oder Straßenliste enthalten,
daß die Eingabeanordnung ein Spracheingabesystem enthält, welches zur Weiterleitung von Spracheingaben an die Steueranordnung vorgesehen ist und daß die Steueranordnung zuerst zur sequentiellen Suche eines sprachlich eingegebenen Orts- oder Straßennamens vom Anfang der zweiten Orts- oder Straßenliste vorgesehen ist.

Das erfindungsgemäße Eingabesystem kann beispielsweise bei einem Navigationssystem, einem Telefonauskunftssystem, einer Computeranwendung usw. eingesetzt werden. Die Datenquellenanordnung, welche beispielsweise aus einem CD-ROM-Laufwerk mit CD-ROM besteht, enthält außer einer ersten, alphabetisch sortierten Orts- und/oder Straßenliste mindestens eine zweite, nach einem Häufigkeitskriterium sortierte Orts- und/oder Straßenliste. Beispielsweise kann die zweite Ortsliste nach der Einwohnerzahl der Orte sortiert sein. Die zweite Orts- oder Straßenliste kann auch auf einem sonstigen internen oder externen Speicher, der dann Teil der Datenquellenanordnung ist, abgelegt sein. Die Eingabeanordnung enthält nach der Erfindung ein Spracheingabesystem, welches die von einem Benutzer sprachlich eingegebenen Orte- oder Straßennamen an die Steueranordnung weiterleitet. Die Steueranordnung führt eine Spracherkennung und einen Vergleich des erkannten gesprochenen Orts- oder Straßennamens mit den in der zweiten Orts- oder Straßenliste enthaltenen Orts- oder Straßennamen durch. Dadurch, daß die zweite Orts- und/oder Straßenliste nach einem Häufigkeitskriterium sortiert ist, ist die Wahrscheinlichkeit sehr groß, daß der gesuchte Orts- oder Straßenname am Anfang der zweiten Orts- oder Straßenliste aufgeführt ist und somit die Suche in der zweiten Orts- oder Straßenliste in den meisten Fällen schneller ist als in der ersten Ortsoder Straßenliste.

Wie oben erwähnt kann das Eingabesystem Bestandteil eines Navigationssystems sein. Bei der Suche z.B. nach einem Ortsnamen in der ersten Ortsliste können gegebenenfalls bei einem nach dem Stand der Technik arbeitenden Navigationssystems mehrere Minuten vergehen, wenn Spracheingaben gemacht werden. Dies ist für den Benutzer nicht akzeptabel. Damit der Benutzer in den meisten Fällen nicht langen Wartezeiten ausgesetzt ist, wird nach der Erfindung nicht in der ersten sondern in der zweiten Orts- oder Straßenliste gesucht. In den meisten Fällen erhält der Benutzer kurz nach der Spracheingabe ein Ergebnis.

Als Häufigkeitskriterium kann nicht nur die Anzahl der Einwohner eines Ortes oder die Anzahl der in einer Straße wohnenden Einwohner gewählt werden, sondern auch eine aus Erfahrungswerten gebildete Suchhäufigkeit von Orten oder Straßen. Weiter kann eine Orts- oder Straßenliste nach Suffixen sortiert sein, d.h. am Anfang einer solchen Orts- oder Straßenliste stehen beispielsweise die Ortsnamen mit bestimmten Endsilben, die am häufigsten vorkommen (z.B. "...stadt"). Als weiteres Häufigkeitskriterium kann ein Präfix, die Silbenzahl oder eine bestimmte Eigenschaft der Orts- oder Straßennamen vorgesehen sein. Eine Eigenschaft ist z.B. die Schreibweise eines Ortes oder einer Straße. Diese kann in einem oder mehreren Worten, mit Bindestrich usw. erfolgen.

Die Suche nach einem erkannten gesprochenen Orts- oder Straßennamen kann in mehreren Schritten erfolgen. Wenn beispielsweise ein Ort einer Großstadt (z.B. "Hamburg") gesucht wird und die zweite Ortsliste nach der Einwohnerzahl sortiert ist, wird praktisch sofort der erkannte Name ausgegeben. In einem ersten Schritt ist die Suche so ausgelegt, daß in einer ersten Teilmenge der zweiten Orts- oder Straßenliste gesucht wird, wie dies in Anspruch 3 angegeben ist. Die erste Teilmenge ist so groß, daß eine Suche praktisch in Echtzeit möglich ist. Falls der gesuchte Orts- oder Straßenname nicht gefunden worden ist wird in einem zweiten Schritt in einer zweiten Teilmenge gesucht, wie dies in Anspruch 4 beschrieben ist. Die zweite Teilmenge umfaßt in der Regel die restlichen Orts- oder Straßennamen der zweiten Orts- oder Straßenliste. Der dritte Suchschritt, der in Anspruch 5 angegeben ist, wird nötig, wenn die Suche auch im zweiten Schritt zu keinem Ergebnis geführt hat. Hierbei kann entweder auf eine sprachliche Buchstabeneingabe oder eine dritte Orts- oder Straßenliste zurückgegriffen werden.

Nach einem Suchvorgang in der ersten, zweiten oder dritten Orts- oder Straßenliste und während eines darauffolgenden Dialogs mit einem Benutzer kann die Steueranordnung schon wieder einen weiteren Suchvorgang im Hintergrund starten.

Ein Ausführungsbeispiel der Erfindung wird nachstehend anhand der Figur näher erläutert. Diese zeigt ein Blockschaltbild eines Navigationssystems für Landfahrzeuge.

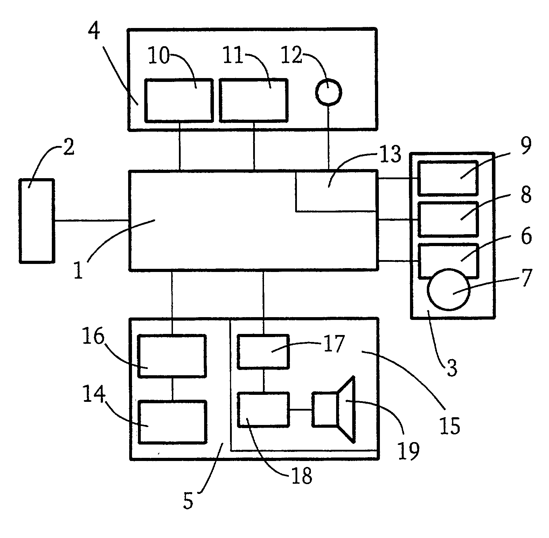

In Fig. 1 ist ein Ausführungsbeispiel eines Navigationssystems für Landfahrzeuge als Blockschaltbild dargestellt. Das Navigationssystem enthält eine Steueranordnung 1, eine Meßanordnung 2, eine Datenquellenanordnung 3, eine Eingabeanordnung 4 und eine Ausgabeanordnung 5. Die Steueranordnung 1 kann beispielsweise einen Mikroprozessor enthalten, der u.a. die Navigationsberechnungen durchführt und mit wenigstens einem Festwertspeicher (ROM) z.B. zur Ausführung eines Programms und einem Schreib- und Lesespeicher (RAM) zur Speicherung von Daten während des Betriebes gekoppelt ist.

Die Meßanordnung 2 liefert der Steueranordnung 1 Daten und enthält beispielsweise ein Tachometer, einen elektronischen Kompaß und eine GPS-Empfangseinheit (GPS = Global Positioning System). Gegebenenfalls enthält die Meßanordnung auch Radsensoren, die der Steueranordnung 1 Richtungs- und Entfernungsdaten von dem linken und rechten Vorder- oder Hinterrad des Fahrzeugs zuführen. Sonst werden die Richtungs- und Entfernungsdaten aus den vom Tachometer und dem elektronischen Kompaß abgegebenen Signalen ermittelt. Die GPS-Empfangseinheit berechnet anhand empfangener Satellitendaten die gegenwärtige Position des Fahrzeugs und gibt die berechneten Positionsdaten an die Steueranordnung 1 weiter. Diese von der GPS-Empfangseinheit gelieferten Positionsdaten weisen eine Ungenauigkeit von bis zu 100 Metern auf.

Die Datenquellenanordnung 3 enthält wenigstens eine Vorrichtung zur Lieferung digital codierter Navigationsdaten von einem Navigationsdatenspeicher an die Steueranordnung 1. Diese Vorrichtung kann beispielsweise ein CD-ROM-Laufwerk 6 sein, daß Daten eines bestimmten Bereichs (z.B. Deutschland) von einer CD-ROM 7 (Navigationsdatenspeicher) entnimmt. Weiter kann die Datenquellenanordnung 3 einen RDS-TMC-Empfänger 8 (RDS = Radio Data System, TMC = Traffic Message Channel) oder ein GSM-Modul 9 (GSM = Global System for Mobile Communication) enthalten, die digital codierte Verkehrsmeldungen empfangen und an die Steueranordnung 1 weitergeben. Das GSM-Modul kann des weiteren auch verwendet werden, um Telefongespräche durchzuführen.

Die Eingabeanordnung 4 enthält eine Tastatur 10, gegebenenfalls einen Trackball 11 und ein Mikrofon 12. Ein Benutzer kann manuelle Eingaben über die Tastatur 10 und/oder den Trackball 11 und/oder Spracheingaben über das Mikrofon 12 durchführen. Die Tastatur 10 kann dabei auch Teil einer Fernbedienung sein. Die von einem Benutzer (z.B. Fahrer) des Navigationssystems gemachten Eingaben über die Eingabeanordnung 4 werden auch der Steueranordnung 1 zugeführt. Die über das Mikrofon 12 gemachten Spracheingaben werden einem Spracherkenner 13 zugeführt, der Teil der Steueranordnung 1 ist. Der Spracherkenner 13 besteht beispielsweise aus einem Signalprozessor mit Peripherieschaltelementen, wie z.B. wenigstens ein Speicher. Der Signalprozessor arbeitet nach einem in einem Speicher abgelegten Softwaremodul zur Spracherkennung. Die Steueranordnung enthält außer dem Spracherkenner 13 wenigstens einen weiteren Prozessorbaustein mit entsprechenden Peripherieelementen.

Die Ausgabeanordnung 5 kann eine Anzeigevorrichtung 14 und eine Sprachausgabeschaltung 15 aufweisen. Zur Ansteuerung der Anzeigevorrichtung 14 dient noch eine ebenfalls in der Ausgabeanordnung 5 enthaltene Ansteuerschaltung 16. Bestandteil der Sprachausgabeschaltung ist auch z.B. eine Sprachsysntheseschaltung 17, ein Verstärker 18 und ein Lautsprecher 19.

Die Steueranordnung 1 bestimmt zwischen wenigstens zwei Punkten (Start- und Zielpunkt) eine Strecke oder Route. Vor der Fahrt hat der Benutzer (z.B. Fahrer) über die Eingabeanordnung 4 mindestens den Zielpunkt einzugeben. Diese eingegebenen Daten werden in der Regel auch von der Ausgabeanordnung 5 zur Kontrolle für den Benutzer ausgegeben. Während der Fahrt werden dem Fahrer akustische oder optische Anweisungen von der Steueranordnung 1 mittels der Ausgabeanordnung 5 erteilt. Zur Durchführung z.B. der Streckenplanung und der Anweisungen verwendet die Steueranordnung 1 verschiedene Softwaremodule. Anhand der von der Meßvorrichtung 2 gelieferten Daten (Positions-, Richtungs- und Entfernungsdaten) und den von der Datenquellenanordnung 3 zugeführten Daten berechnet die Steueranordnung 1 mittels eines Softwaremoduls zur Positionsbestimmung den jeweiligen Positionspunkt des Fahrzeugs zu Beginn und während der Fahrt. Ein weiteres Modul zur Routenplanung berechnet jeweils die zu dem jeweiligen Zielpunkt zu fahrende Route anhand der von dem Softwaremodul zur Positionsbestimmung ausgegebenen Positionpunkt und dem Zielpunkt. Hierbei können auch Verkehrsmeldungen berücksichtigt werden, um beispielsweise den Fahrer anzuweisen, einen Stau zu umfahren. Ein Softwaremodul zur Routenangabe empfängt den jeweiligen Positionspunkt von dem Softwaremodul zur Positionsbestimmung, verschiedene Routenangaben von dem Softwaremodul zur Routenplanung und gegebenenfalls auch Navigationsdaten von der Datenquellenanordnung 3. Das Softwaremodul zur Routenangabe erzeugt Steuerdaten für die Sprachausgabe und für die bildliche Darstellung von Anweisungen. Es ist auch möglich, einen Landkartenausschnitt auf der Anzeigevorrichtung 14 mit der jeweiligen Positionsangabe darzustellen.

Die Steueranordnung 1 führt mit einem Benutzer einen menügesteuerten Dialog durch. Beispielsweise bietet ein auf der Anzeigevorrichtung 14 angezeigtes Hauptmenü die Menüpunkte

| | | | |
|---|---|---|---|
| 1) | Zieleingabe | 4) | Zielführung |
| 2) | Karte | 5) | Einstellungen |
| 3) | Standort | | |

an. Mit einem Koordinateneingabesystem, das Bestandteil der Tastatur 10 ist, wird beispielsweise ein Menüpunkt selektiert. Ein solches Koordinateneingabesystem kann beispielsweise aus vier Richtungstasten und einer Bestätigungstaste oder einem Trackball bestehen. Durch Betätigung einer Richtungstaste kann beispielsweise die Position eines Cursors oder eines anderes graphischen Symbols (z.B. Balkendarstellung) auf der Anzeigevorrichtung 14 verändert werden. Ist ein bestimmter Menüpunkt mittels der Richtungstasten z.B. graphisch hervorgehoben worden, erfolgt nach Betätigen der Bestätigungstaste eine Aktion.

Zu Beginn einer Fahrt wird in der Regel als erstes eine Zieleingabe erfolgen. Nach Auswahl des Menüpunktes "Zieleingabe" im Hauptmenü muß zuerst ein Ortsname eingegeben werden. Dazu wird im Untermenü "Zieleingabe", welches beispielsweise die Menüpunkte

| | | | |
|---|---|---|---|
| 1) | Ort | 6) | Zieleingabe Karte |
| 2) | Straße | 7) | Adreßbuch |
| 3) | Ziel löschen | 8) | neue Adresse |
| 4) | Zielführung | 9) | zurück zum Hauptmenü |
| 5) | Information zum Zielort | | |

enthält, der Menüpunkt "Ort" ausgewählt. Auf der Anzeigevorrichtung 14 werden dann beispielsweise Buchstaben angezeigt und die Menüpunkte "Abbruch", "Löschen", "Leer" (für Leerzeichen), "OK" usw. Mit Hilfe des Koordinateneingabesystems wird Buchstabe für Buchstabe des Ortsnamens ausgewählt. Wenn der Benutzer die Eingabe des Ortsnamens ganz oder teilweise beendet hat, betätigt dieser den Menüpunkt "OK". Die Steueranordnung 1 überprüft, ob der vom Benutzer ganz oder teilweise eingegebene Ortsname sich auf der CD-ROM 7 eindeutig finden läßt. Ist der Ortsname nicht vorhanden wird dies dem Benutzer mitgeteilt, so daß dieser einen anderen Namen eingeben kann. Ist die Eingabe mehrdeutig, wird eine Aufstellung von Ortsnamen auf der Anzeigevorrichtung 14 eingeblendet, aus welcher der gewünschte Ortsname ausgewählt werden kann.

Nach der Auswahl des Ortsnamens wird für die Auswahl eines Straßennamens ein weiteres Menü mit Buchstaben und den Menüpunkten "Abbruch", "Löschen", "Leer" (für Leerzeichen), "OK" usw. auf der Anzeigevorrichtung 14 dargestellt. Der Straßenname wird auf die gleiche Weise wie der Ortsname eingegeben.

Wenn der Straßenname nicht bekannt ist, kann die Zieleingabe nach Auswahl des Ortsnamens auf eine andere Art durchgeführt werden. Die Zieleingabe kann nach Auswahl des Menüpunktes "Zieleingabe Karte" mit Hilfe einer auf der Anzeigevorrichtung 14 dargestellten Karte durchgeführt werden. Hierbei kann mit einem auf der Landkarte mit einem großen Kartenmaßstab eingeblendeten Cursor zunächst die Zielgegend grob ausgewählt werden und Schritt für Schritt der Kartenmaßstab verkleinert werden, bis der gewünschte Zielpunkt gefunden worden ist.

Die Eingabe des Zielpunktes nach der Auswahl des Ortsnamens kann noch mittels einer Aufstellung durchgeführt werden, die bestimmte Zielkategorien angibt. Im Untermenü "Zieleingabe" muß dann der Menüpunkt "Information zum Zielort" ausgewählt werden. Nach der Selektierung dieses Menüpunktes wird eine Aufstellung mit verschiedenen Kategorien auf der Anzeigevorrichtung 14 angezeigt. Dies können z.B. sein: Hotels, Restaurants, Sehenswürdigkeiten, Parkplätze, Tankstellen, Bahnhöfe oder Museen. Nach Auswahl einer Kategorie wird eine weitere Aufstellung mit verschiedenen Auswahlmöglichkeiten innerhalb der Kategorie eingeblendet. Beispielsweise kann in der Kategorie "Hotels" ein bestimmtes Hotel ausgewählt werden, was den Zielpunkt darstellt.

Ferner besteht die Möglichkeit auf ein Adreßbuch, in dem persönliche Zielpunkte gespeichert sind, durch Auswahl des Menüpunktes "Adreßbuch" zurückzugreifen. Ein neuer Zielpunkt kann über den Menüpunkt "neue Adresse" eingegeben werden. Die Eingabe für das Adreßbuch erfolgt wie oben für die Eingabe des Orts- und Straßennamens beschrieben.

Ein z.B. eingegebener Orts- und Straßenname als Zielpunkt wird mit Hilfe des Menüpunktes "Ziel löschen" gelöscht. Damit die Steueranordnung 1 nach Eingabe des Zielpunktes eine Routenplanung durchführen kann, muß der Benutzer den Menüpunkt "Zielführung" auswählen. Die Anzeigevorrichtung 14 wechselt dann in das Untermenü "Zielführung", in dem verschiedene Darstellungsarten (z.B. Kartendarstellung) angeboten werden. Die Anzeigevorrichtung 14 kann noch weitere Menüpunkte darstellen, die aus Gründen der Übersichtlichkeit nicht näher erläutert werden.

Namenseingaben und eine Menüauswahl können nicht nur über die Tastatur sondern auch sprachgesteuert mit Hilfe des Mikrophons 12 und des Spracherkenners 13 erfolgen. Bevor eine Spracheingabe erfolgt, muß der Benutzer eine Taste betätigen, mit der die Spracheingabe zusätzlich zur Tastatureingabe aktiviert wird. Die Steueranordnung 1 gibt zur Bestätigung des Einschaltens der Spracheingabe über die Sprachausgebeschaltung eine akustische Rückmeldung aus. Beispielsweise wird von der Sprachausgabeschaltung "Zieleingabe" angesagt, oder es wird ein Signalton ausgegeben. Der Benutzer kann im folgenden z.B. bestimmte vorgegebene Kommandos verwenden, um bestimmte Menüpunkte anzusprechen oder Dateneingaben vorzunehmen.

Nachdem beispielsweise gesteuert von der Steueranordnung 1 die Sprachausgabeschaltung "Zieleingabe" angesagt hat, muß der Benutzer das Kommando "Zieleingabe Ort" oder "Ort" sprechen, um den Ort eines Zielpunktes anzugeben. Die Sprachausgabeschaltung fordert den Benutzer dann auf, den Ort zu nennen: "Bitte nennen Sie den Ort." Als Antwort kann dann von dem Benutzer die gesprochene Eingabe des Zielortes erfolgen. Beispielsweise antwortet der Benutzer: "Essen".

Ähnlich wie bei der Tastatureingabe von Daten mit Hilfe des Koordinateneingabesystems kann eine sprachliche Dateneingabe auch durch Ansage einzelner Zeichen (z.B. Buchstaben und Zahlen) erfolgen. Eine solche Eingabe kann möglich oder nötig sein, wenn die Steueranordnung 1 beispielsweise eine Spracheingabe eines komplett gesprochenen Wortes nicht zuordnen kann. Alternativ zur Eingabe des gesprochenen Ortsnamens kann auch eine gesprochene Telefonvorwahl oder Postleitzahl vom Benutzer eingegeben werden. Auf der CD-ROM 7 sind dann außer den Ortsnamen auch Postleitzahlen und/ oder Telefonvorwahlen gespeichert. Zusätzlich oder anstatt der Eingabe des gesprochenen Ortsnamens kann es erforderlich sein, den Ortsnamen zu buchstabieren.

Des weiteren können von einem Benutzer bei einem Dialog mit dem Navigationssystem die Kommandos "Ja" bzw. "Nein" zur Beantwortung einer Frage, "Wiederholen" zur Wiederholung der letzten Ansage, "Hilfe" bzw. "Information" zum Abrufen einer Information z.B. zur Bedienung des Navigationssystems, "Abbruch" bzw. "Zurück" zum Beenden einer Dateneingabe oder zur Rückkehr zu einem übergeordneten Menü, "Korrektur" zur Veränderung von Datenelementen und "Löschen" zur Löschung von Datenelementen eingegeben werden. Die sprachlichen Dateneingaben rufen nicht nur Ansagen hervor, sondern bewirken auch Veränderungen auf der Anzeigevorrichtung 14. Beispielsweise wird nach Ansage eines Menüpunktes ein Untermenü auf der Anzeigevorrichtung 14 dargestellt.

Wie oben schon bei der Tastatureingabe beschrieben, wird auch bei der Spracheingabe zuerst der Ort des Zielpunktes eingegeben. Hierbei ist zu beachten, daß z.B. die CD-ROM 7 für einen Bereich mehr als 20.000 Ortsnamen enthalten kann. Beispielsweise weist die CD-ROM 7 für den Bereich oder das Land "Deutschland" u.a. eine erste, alphabetisch sortierte Ortsliste mit gegenwärtig ungefähr 26 000 Ortsnamen auf. Eine vollständige Suche nach einem Ortsnamen in dem gesamten Bestand der Ortsliste kann bei Navigationssystemen nach dem Stand der Technik mehrere Minuten dauern. Um die Suche nach einem Ortsnamen zu beschleunigen, weist die CD-ROM 7 wenigstens eine zweite Ortsliste auf, welche einen Teil der Ortsnamen der ersten Ortsliste enthält. Die zweite Ortsliste ist nach einem Häufigkeitskriterium sortiert. Dies können die am häufigsten verwendeten Ortsnamen sein. Darunter sind solche Orte mit den meisten Einwohnern eines Landes oder Bereiches zu verstehen. Die zweite Ortsliste weist eine von der Einwohnerzahl eines Ortes abhängige Sortierung auf. Das heißt, daß am Anfang der zweiten Ortsliste die Großstädte aus dem Land "Deutschland" abgelegt sind. Für das Land "Deutschland" können z.B. bis zu 10.000 Ortsnamen in der zweiten Ortsliste gespeichert sein.

Nachdem der Spracherkenner 13 eine Spracheingabe analysiert hat, wird der erkannte gesprochene Ortsname in der Steueranordnung 1 mit den von der zweiten Ortsliste gelieferten Ortsnamen verglichen. Dieser Vergleich könnte auch im Spracherkenner 13 erfolgen, der - wie oben schon erwähnt - ein Bestandteil der Steueranordnung 1 ist. In einem ersten Schritt wertet die Steueranordnung eine erste Teilmenge der Ortsnamen der zweiten Ortsliste aus, und liefert den Ortsnamen an die Ausgabeanordnung 5, welcher dem erkannten, gesprochenen Ortsnamen am ähnlichsten ist. Hierbei beginnt die Suche am Anfang der zweiten Ortsliste, d.h. die erste Teilmenge enthält die Orte mit den meisten Einwohnern. Die Anzahl der im ersten Schritt auszuwertenden Ortsnamen hängt von der Leistungsfähigkeit insbesondere der Steueranordnung 1 und des Spracherkenners 13 ab. Die Größe der ersten Teilmenge der zweiten Ortsliste ist so gewählt, daß der Benutzer nach der Spracheingabe ein erstes Ergebnis in Echtzeit, d.h. ohne unakzeptable Wartezeiten, erhält. Um eine Verarbeitung in Echtzeit bei den derzeitigen Navigationssystemen zu ermöglichen, umfaßt die erste Teilmenge ungefähr 200 Ortsnamen.

Falls der von dem Navigationssystem gefundene Ortsname nicht dem gesprochenen Ortsnamen entspricht und somit der Ortsname nicht in der ersten Teilmenge enthalten ist, wird in einem zweiten Schritt in einer zweiten Teilmenge der zweiten Ortsliste, welche keine Ortsnamen der ersten Teilmenge enthält, eine Suche durchgeführt. In der Regel enthält die zweite Teilmenge die restlichen Daten der zweiten Ortsliste. Die zweite Teilmenge wird nach dem gleichem Kriterium wie die erste Teilmenge durchsucht. Auch die Reihenfolge der Suche in der zweiten Teilmenge ist von der Einwohnerzahl des Ortes abhängig. Die Suche in der zweiten Teilmenge erfolgt nicht in Echtzeit, da die zweite Teilmenge deutlich mehr Ortsnamen als die erste Teilmenge aufweist.

Das Ergebnis des zweiten Schrittes sind ein oder mehrere Ortsnamen. Diese Ortsnamen werden zusammen mit einer Nummer oder einem anderen Identifizierer auf der Anzeigenvorrichtung 14 dargestellt und/oder über die Sprachausgabeschaltung 15 ausgegeben. Bei der Suche nach dem Ortsnamen während des zweiten Schrittes werden eventuell Fehler bei der Spracherkennung dadurch berücksichtigt, daß mehrere ähnlich klingende Ortsnamen ausgegeben werden. Der Benutzer kann dann anhand der Nummer oder eines anderen Identifizierers den richtigen Ortsnamen aus der Liste der während des zweiten Schrittes gefundenen Ortsnamen auswählen.

Falls der Zielpunkt nicht während des zweiten Schrittes gefunden wurde, wird der Benutzer in einem dritten Schritt um weitere Informationen gebeten, um den korrekten Ortsnamen zu finden. Dieser kann z.B. aufgefordert werden, die Anfangsbuchstaben des gesuchten Ortsnamens zu buchstabieren. Die Suche nach dem Ortsnamen wird in diesem Fall in der ersten Ortsliste durchgeführt.

Die Verwendung einer zweiten Ortsliste und die Aufforderung zur Eingabe weiterer Informationen nach der Suche in der zweiten Ortsliste dient dazu, den Benutzer nicht langen Wartezeiten auszusetzen. Zur Bestimmung des Ortsnamens können sich beispielsweise folgender Dialog ergeben:

| | | | | |
|---|---|---|---|---|
| 1. | Ansage: | "Welcher Ort?" | | |
| 2. | Benutzer: | "<Ort>" | | |
| 3. | Ansage: | "Wollen Sie nach < Ortsname aus erster Teilmenge der zweiten Ortsliste > ?" | | |
| 4. | Benutzer: | | | |
| | a) | "Ja" | [Ende] | |
| | b) | "Nein" | [zu Punkt 5] | |
| 5. | Ansage: | "Wollen Sie in einen der angezeigten Orte? Dann geben Sie bitte die entsprechende Nummer an." | | |
| 6. | Benutzer: | | | |
| | a) | "<Zahl 1 ... 8>" | | [Ende] |
| | b) | "Nein" | | [zu Punkt 7] |
| 7. | Ansage: | "Bitte buchstabieren Sie den Anfang des Ortsnamens." | | |
| 8. | Benutzer: | " < Einige Anfangsbuchstaben des Ortsnamens >" | | |
| 9. | Ansage: | "Bitte warten Sie auf die Anzeige des genannten Ortes. | | |
| | | Dann geben Sie bitte die entsprechende Nummer an." | | |
| 10. | Benutzer: | "<Zahl 1 ... 8>" | | |

Nachdem vom Navigationssystem die Frage gestellt worden ist, in welchem Ort der Zielpunkt liegt (Punkt 1), und der Benutzer geantwortet hat (Punkt 2), sucht die Steueranordnung 1 in der ersten Teilmenge der zweiten Ortsliste nach dem Ortsnamen. Dabei wird der erkannte gesprochene Ortsname auf den ähnlichsten Ortsnamen der ersten Teilmenge abgebildet. Beispielsweise wird der nicht in der ersten Ortskurzliste enthaltene Ort "Hammermühle" gesucht und der Ortsname "Hamburg" ausgegeben, weil die beiden Ortsnamen klanglich am ähnlichsten sind. Wenn die Steueranordnung 1 den richtigen Ortsnamen gefunden hat, wird der Benutzer mit "Ja" antworten (Punkt 4a) und die Suche beendet. In dem anderen Fall (Punkt 4b) antwortet der Benutzer mit "Nein".

Während der Zeit des ersten Schrittes, in welcher der ähnlichste Ortsname an den Benutzer ausgegeben wird und in welcher der Benutzer diesen Ortsnamen bestätigt oder ablehnt, kann die Steueranordnung 1 schon in einem zweiten Schritt in der zweiten Teilmenge der zweiten Ortsliste weiter suchen. Alternativ kann diese Suche auch erst nach Abschluß des ersten Schritts durchgeführt werden. Die daraus resultierende Wartezeit muß aber für den Benutzer akzeptabel bleiben.

Das Ergebnis des zweiten Schritts ist mindestens ein weiterer über die Ausgabeanordnung 5 ausgegebener Ortsname. In der Regel werden aber mehrere Ortsnamen der zweiten Teilmenge mit zugewiesenen Nummern auf der Anzeigevorrichtung 14 dargestellt. Beispielsweise könnten folgende Ortsnamen auf der Anzeigevorrichtung 14 erscheinen:
1) Hameln
2) Hamm
3) Hammelburg
4) Hammer

Es werden also mehrere Ortsnamen aus der zweiten Teilmenge auf der Anzeigevorrichtung 14 ausgegeben, die dem gesuchten Ortsnamen am ähnlichsten sind, und der Benutzer aufgefordert, die Nummer zu nennen, unter welcher der gesuchte Ortsname aufgeführt ist (Punkt 5).

Falls der gesuchte Ortsname aufgelistet ist, gibt der Benutzer die entsprechende Nummer an und die Suche wird beendet (Punkt 6a). Falls der Benutzer mit "Nein" antwortet (Punkt 6b), wird dieser aufgefordert einige Anfangsbuchstaben des gesuchten Ortsnamens anzugeben (Punkt 7). Der Benutzer buchstabiert beispielsweise die ersten fünf Buchstaben des Ortsnamens (Punkt 8). Nach der Buchstabierung wird der Benutzer informiert, daß die Suche Wartezeit beansprucht.

Die Erkennung von gesprochenen Buchstaben ist unsicher. Aus diesem Grund liefert der Spracherkenner 13 nicht jeweils einen einzelnen erkannten gesprochenen Buchstaben, sondern für jeden gesprochenen Buchstaben mehrere Erkennungsalternativen zusammen mit Erkennungswahrscheinlichkeiten. Diese Informationen werden von der Steueranordnung 1 benutzt, um eine Vorauswahl aus der ersten Ortsliste zu treffen, die dem Spracherkenner 13 zugeführt werden. Hierdurch muß der Spracherkenner 13 nur die von der Steueranordnung 1 ausgewählten Ortsnamen mit den gesprochenen Ortsnamen vergleichen und kann so eine schnelle und sichere Entscheidung treffen.

Eine alternative Vorgehensweise wäre es, wenn die Steueranordnung 1 den Benutzer jeweils fragt, ob der Buchstabe korrekt erkannt worden ist. Während der Frage und der Antwort des Benutzers kann gleichzeitig ein Hintergrundprozeß in der Steueranordnung 1 laufen, der die jeweiligen Ortsnamen selektiert, die mit dem entsprechenden Buchstaben anfangen bzw. die auf den Anfangsbuchstaben folgen. Diejenigen Ortsnamen, welche die von dem Benutzer genannten Anfangsbuchstaben in der Gesamtliste die Ortsnamen aufweisen, werden entweder mit einer Nummer versehen auf der Anzeigevorrichtung 14 dargestellt oder können, wie in der oben beschriebenen Vorgehensweise erläutert, dem Spracherkenner 13 zur weiteren Entscheidung zugeführt werden. Die ermittelten Ortsnamen können folgendermaßen auf der Anzeigevorrichtung 14 dargestellt werden:
1) Hammerhaus
2) Hammerleubsdorf
3) Hammermühle bei Bad Düben
4) Hammermühle bei Selters
5) Hammermühle bei Westerburg
6) Hammersbach
7) Hammersfeld
8) Hammerstadt

Der Benutzer kann anschließend durch Angabe der angezeigten Zahl den gesuchten Ort kennzeichnen (Punkt 10), womit die Suche beendet ist. Beispielweise gibt er die Zahl 4 für den Ort "Hammersmühle bei Selters" an.

Es ist in dem obigen Dialog nicht erwähnt, daß ein Benutzer auch eine Korrektur oder ein Ende jedes Dialoges durchführen kann. Werden während einer Eingabe beispielsweise die Kommandos "Korrektur" oder "Abbruch" von dem Benutzer ausgesprochen, wird entweder zu dem vorigen Schritt zurückgegangen oder die gesamte Eingabeprozedur unterbrochen. Das gilt auch für die folgenden Dialoge.

Nachdem der Ortsname des Zielpunktes gesucht worden ist, fragt das Navigationssystem anschließend nach der Straße des Zielpunktes. Bei kleineren Orten findet die Steueranordnung 1 die gesuchte Straße in einer ersten Straßenliste aufgrund der geringen Anzahl an Einträgen praktisch sofort. Bei der Suche in der ersten Straßenliste in Städten mit über 100.000 Einwohnern kann diese Suche bei Navigationssystemen nach dem Stand der Technik mehr als 1 Minute dauern. Beispielsweise weist die Straßenliste für die Stadt Berlin ungefähr 8.000 Einträge auf. Deshalb ist es vorteilhaft, auch bei der Suche nach Straßennamen in größeren Orten weitere Straßenlisten zu verwenden, die nach einem Häufigkeitskriterium oder einem Erfahrungskriterium sortiert sind. Die CD-ROM 7 enthält daher mindestens eine zweite Straßenliste mit häufig gesuchten Straßen für verschiedene größere Städte, die z.B. über 100.000 Einwohner aufweisen. Die Suche nach Straßennamen in größeren Städten kann analog zur oben geschilderten Suche nach einem Ortsnamen erfolgen. In den ersten beiden Schritten werden dabei zwei Teilmengen der zweiten Straßenliste von häufig gesuchten Straßennamen durchsucht. Während eines dritten Schrittes wird die Suche nach dem Straßennamen durch Zusatzfragen unterstützt. Beispielsweise wird der Benutzer aufgefordert die Anfangsbuchstaben des gesuchten Straßennamens zu buchstabieren.

Ein Dialog zur Bestimmung des Straßennamens des Zielpunktes kann z.B. folgenden Inhalt haben:

| | | | | |
|---|---|---|---|---|
| 1. | Ansage: | "Welche Straße?" | | |
| 2. | Benutzer: | "<Straßenname >" (z.B. "Lenaustraße") | | |
| 3. | Ansage: | "Wollen Sie nach <Straßenname aus erster Teilmenge der zweiten Straßenliste >?" | | |
| 4. | Benutzer: | | | |
| | a) | "Ja" | [Ende] | |
| | b) | "Nein" | [zu Punkt 5] | |
| 5. | Ansage: | "Wollen Sie in eine der angezeigten Straßen? Dann geben Sie bitte die entsprechende Nummer an." | | |
| 6. | Benutzer: | | | |
| | a) | "<Zahl 1 ... 8>" | | [Ende] |
| | b) | "Nein" | | [zu Punkt 7] |
| 7. | Ansage: | "Bitte buchstabieren Sie den Anfang des Straßennamens." | | |
| 8. | Benutzer: | "< Einige Anfangsbuchstaben des Straßennamens > " | | |
| 9. | Ansage: | "Die Datenbank wird durchsucht." | | |
| 10. | Ansage: | "Wenn Sie eine der angezeigten Straßen nannten, geben Sie bitte die entsprechende Nummer an. " | | |
| 11. | Benutzer: | " < Zahl > \|keine" | | |
| | | [a) Wenn <Zahl>, dann: Ende] | | |
| | | [b) Wenn "keine", dann: zu Punkt 12] | | |
| 12. | Ansage: | "Eine entsprechende Straße wurde nicht gefunden." | | |

Der obige Dialog beginnt mit der Frage des Navigationssystems, in welcher Straße der Zielpunkt liegt (Punkt 1). Der Benutzer möchte beispielsweise zur "Lenaustraße" in den Ort "München". Nachdem der Benutzer z.B. mit "Lenaustraße" geantwortet hat (Punkt 2), sucht die Steueranordnung 1 in der ersten Teilmenge der zweiten Straßenliste nach dem Straßennamen. Dabei wird der erkannte gesprochene Straßenname auf den ähnlichsten Straßennamen der ersten Teilmenge abgebildet. Nach der Suche in der ersten Teilmenge der zweiten Straßenliste wird z.B. der Straßenname "Leopoldstraße" ausgegeben, weil die beiden Straßennamen "Lenaustraße" und "Leopoldstraße" klanglich am ähnlichsten sind. Wenn der gefundene Straßenname dem gesuchten entspricht, wird der Benutzer mit "Ja" antworten (Punkt 4a) und die Steueranordnung 1 beendet die Suche. In dem anderen Fall (Punkt 4b) antwortet der Benutzer mit "Nein". Wie oben bei der Suche nach dem Ortsnamen beschrieben, erfolgt die Suche während des ersten Schrittes in Echtzeit.

In einem zweiten Schritt sucht die Steueranordnung 1 in einer zweiten Teilmenge von Straßennamen. Diese Suche kann schon während der Zeit gestartet werden, in welcher der ähnlichste Straßenname nach der Suche während des ersten Schritts an den Benutzer ausgegeben wird und in welcher der Benutzer diesen Straßennamen bestätigt oder ablehnt.

Das Ergebnis des zweiten Schritts sind in der Regel mehrere Staßennamen, die beispielsweise auf der Anzeigevorrichtung 14 zusammen mit Nummern dargestellt werden. Diese Straßennamen der zweiten Teilmenge der zweiten Straßenliste sind dem gesuchten Straßennamen am ähnlichsten. Beispielsweise könnten folgende Straßennamen angezeigt werden:
1) Lenbachplatz
2) Leonrodstraße
3) Lerchenauer Straße
4) Lenggrieser Straße

Der Benutzer wird aufgefordert, die Nummer zu nennen, unter welcher der gesuchte Straßenname aufgeführt ist (Punkt 5). Falls der gesuchte Straßenname aufgelistet ist, gibt der Benutzer die entsprechende Nummer an und die Suche wird beendet (Punkt 6a). Falls der Benutzer mit "Nein" antwortet (Punkt 6b), wird dieser aufgefordert einige Anfangsbuchstaben des gesuchten Straßennamens anzugeben (Punkt 7). Der Benutzer buchstabiert Anfangsbuchstaben des gesuchten Straßennamens (Punkt 8). Nach der Buchstabierung wird der Benutzer informiert, daß die Datenbank durchsucht wird (Punkt 9).

Die Steueranordnung 1 durchsucht mit oder nach der Eingabe der Buchstaben die erste Straßenliste. Wie oben bei der Suche des Ortsnamens beschrieben werden beispielsweise von der Steueranordnung 1 die erkannten Buchstaben und deren Erkennungsalternativen dazu benutzt, um eine Vorauswahl aus der ersten Straßenliste zu treffen. Diese Vorauswahl von Straßennamen wird dem Spracherkenner 13 zugeleitet, der dann eine Entscheidung treffen kann. Die vom Spracherkenner 13 ermittelten Straßennamen werden mit einer Nummer versehen auf der Anzeigevorrichtung 14 dargestellt. Eine solche Liste könnte folgendermaßen aussehen:
1) Lemckestraße
2) Lena-Christ-Straße
3) Lenaustraße
4) Lengmoosstraße
5) Lentnerweg

Der Benutzer kann anschließend durch Angabe der angezeigten Zahl die gesuchte Straße kennzeichnen (Punkt 11), womit die Suche beendet ist. Beispielweise gibt er die Zahl 3 für den Straßennamen "Lenaustraße" an. Falls der Benutzer allerdings keine Zahl angibt, dann wird von dem Navigationssystem angegeben, daß eine entsprechende Straße nicht gefunden worden ist. Das ist z.B. dann der Fall, wenn die gesuchte Straße nicht existiert oder nicht in der entsprechenden Straßenliste auf der CD-ROM 7 gespeichert ist.

Zur Findung eines Orts- oder Straßennamens können dritte Orts- oder Straßenlisten verwendet werden. Die oben geschilderten Schritte können durch andere Schritte ersetzt werden, welche die dritten Orts- oder Straßenlisten verwenden. Hierdurch kann ebenfalls die Eingabe des Orts- oder Straßennamens zuverlässiger und schneller zu machen.

Beispielsweise können für Orts- oder Straßennamen dritte Listen mit häufig verwendeten Wortteilen auf der CD-ROM 7 oder in einem Speicher des Spracherkenners 13 angelegt sein. Eine zweite Straßenliste kann beispielsweise Straßennamen mit dem häufig verwendeten Suffix "...straße" enthalten. Dritte Straßenliste können Straßennamen mit den Suffixen "...weg" oder "...gasse" beinhalten. Analog können für Ortsnamen dritte Ortslisten auf der CD-ROM 7 gespeichert sein, die Ortsnamen mit den Präfixen "Ober...", "Unter...", "Nieder...", "Groß..." usw. enthalten. Auch können dritte Ortslisten mit Ortsnamen abgelegt sein, die Ortsnamen mit den Suffixen "...burg", "...berg", "...stadt", "...dorf" usw. enthalten.

Mit Hilfe der dritten Orts- und Straßenlisten kann das Navigationssystem während des dritten Schritts nicht den Benutzer zum Buchstabieren auffordern, sondern eine Frage stellen, die z.B. folgendermaßen lautet:
"Endet der Straßenname auf '...platz'?"
oder
"Beginnt der Ortsname mit 'Ober...'?".

Durch diese Fragen ist es möglich, die Anzahl der zu untersuchenden Orts- oder Straßennamen deutlich einzuschränken.

Dritte Orts- und/oder Straßenlisten können eine Sortierung entsprechend der Silbenzahl aufweisen. Beispielsweise werden dann am Anfang der jeweiligen dritten Orts- und/oder Straßenliste die einsilbigen Orts- und Straßennamen, dann die zweisilbigen und mehrsilbigen Namen aufgeführt.

Die dritten Orts- und/oder Straßenlisten können permanent oder temporär in einem Speicher des Spracherkenners 13 gespeichert sein. Ein solcher Speicher wird dann als zugehörig zur Datenquellenanordnung 3 betrachtet. Eine temporäre Ortsund/oder Straßenliste wird z.B. während eines laufenden Eingabevorgangs erzeugt, indem die erste Orts- oder Straßenliste von der Steueranordnung entsprechend durchsucht, sortiert und in einem Speicher des Spracherkenners 13 abgelegt wird. Die Spracherkenner nach dem Stand der Technik, wie der Spracherkenner 13, können u.a. bei der Erkennung Vokale und Konsonanten ziemlich sicher voneinander unterscheiden und dadurch die Silbenzahl des Orts- oder Straßennamens abschätzen. Während des dritten Schrittes könnte dann auch zusätzlich von dem Navigationssystem die Frage gestellt werden:
"Hat der genannte Ortsname 2 Silben?"

Durch die Beantwortung der Frage von dem Benutzer, kann die Anzahl der zu untersuchenden Namen reduziert werden.

Auf der CD-ROM 7 bzw. in einem Speicher des Spracherkenners 13 können noch andere dritte Orts- oder Straßenlisten enthalten sein, die eine Sortierung nach bestimmten Eigenschaften eines Orts- oder Straßennamens aufweisen. Verschiedene Orts- oder Straßennamen können aus einem oder mehreren Worten bestehen und mehrere Worte eines Orts- oder Straßennamens können Bindestriche aufweisen. Beispielsweise besteht die Straße "Tulpenweg" aus einem Wort, die Straße "Frankfurter Ring" aus zwei Worten und die Straße "Konrad-Adenauer-Ring" aus drei mit Bindestrichen verbundenen Worten. Durch eine Frage des Navigationssystems an den Benutzer nach einer solchen Eigenschaft, wie z.B.:
"Wird der Straßenname als ein Wort, mit Bindestrichen oder getrennt geschrieben?"
kann die Anzahl der zu durchsuchenden Namen deutlich reduziert werden.

Die jeweiligen Orts- und Straßenlisten können Namen in Rechtschrift (korrekte Rechtschreibung) und/oder in Lautschrift enthalten. Der Spracherkenner 13 ist so ausgelegt, daß er sowohl die gesprochenen Namen mit Namen aus einer Orts- oder Straßenliste vergleichen kann, die in Rechtschrift oder Lautschrift auf der CD-ROM 7 gespeichert sind.

## Patentansprüche

1. Eingabesystem wenigstens für Orts- und/oder Straßennamen mit einer Eingabeanordnung (4), mit einer wenigstens eine Orts- und/oder Straßenliste enthaltenen Datenquellenanordnung (3) und mit einer Steueranordnung (1), die zur Suche von über die Eingabeanordnung (4) eingegebenen Orts- oder Straßennamen in einer Orts- oder Straßenliste der Datenquellenanordnung (3) vorgesehen ist,
**dadurch gekennzeichnet,**
**daß** die Datenquellenanordnung (3) außer einer ersten Orts- und/oder Straßenliste mit alphabetisch sortierten Orts- und/oder Straßennamen wenigstens eine zweite Ortsund/oder Straßenliste mit nach einem Häufigkeitskriterium sortierten Orts- und/oder Straßennamen enthält,
**daß** die zweite Orts- und/oder Straßenlisten wenigstens einen Teil der Orts- und/oder Straßennamen der ersten Orts- und/oder Straßenliste enthalten,
**daß** die Eingabeanordnung (4) ein Spracheingabesystem (12, 13) enthält, welches zur Weiterleitung von Spracheingaben an die Steueranordnung (1) vorgesehen ist und
**daß** die Steueranordnung (1) zuerst zur sequentiellen Suche eines sprachlich eingegebenen Orts- oder Straßennamens vom Anfang der zweiten Orts- oder Straßenliste vorgesehen ist.

2. Eingabesystem nach Anspruch 1,
**dadurch gekennzeichnet,**
**daß** in der zweiten Orts- oder Straßenliste als Häufigkeitskriterium die Anzahl der Einwohnerzahl oder die aus Erfahrungswerten ermittelte Suchhäufigkeit der Orte oder Straßen oder der Suffix oder der Präfix oder die Silbenzahl oder eine Eigenschaft eines Orts- oder Straßennamens vorgesehen ist.

3. Eingabesystem nach Anspruch 1,
**dadurch gekennzeichnet,**
**daß** nach der Spracheingabe eines Orts- oder Straßennamens die Steueranordnung (1) zur Suche des erkannten gesprochenen Orts- oder Straßennamens in einer ersten Teilmenge der zweiten Orts- oder Straßenliste und zur Ausgabe desjenigen in der ersten Teilmenge enthaltenen Orts- oder Straßennamens vorgesehen ist, der dem erkannten gesprochenen Orts- oder Straßennamen am ähnlichsten ist, und
**daß** die erste Teilmenge die jeweils am Anfang der zweiten Orts- oder Straßenliste enthaltenen Orts- oder Straßennamen enthält und die Anzahl der in der ersten Teilmenge enthaltenen Orts- oder Straßennamen so groß gewählt ist, daß eine Suche praktisch in Echtzeit erfolgt.

4. Eingabesystem nach Anspruch 3,
**dadurch gekennzeichnet,**
**daß**, wenn der gesuchte Orts- oder Straßenname nicht in der ersten Teilmenge enthalten ist, die Steueranordnung (1) zur Suche eines Orts- oder Straßennamens in einer zweiten Teilmenge der zweiten Orts- oder Straßenliste und zur Ausgabe wenigstens eines Orts- oder Straßennamens vorgesehen ist, der dem erkannten gesprochenen Orts- oder Straßennamen am ähnlichsten ist, und
**daß** die zweite Teilmenge jeweils wenigstens einen Teil der Orts- oder Straßennamen der zweiten Orts- oder Straßenliste abzüglich der Orts- oder Straßennamen der ersten Teilmenge enthält.

5. Eingabesystem nach Anspruch 4,
**dadurch gekennzeichnet,**
**daß**, wenn der gesuchte Orts- oder Straßenname nicht in der zweiten Teilmenge der zweiten Orts- oder Straßenliste enthalten ist, die Steueranordnung (1)
- nach der Spracheingabe von bestimmten Buchstaben des gesuchten Orts- oder Straßennamens zur Vorauswahl einer Anzahl von Orts- oder Straßennamen aus der ersten Orts- oder Straßenliste und zum Vergleich des erkannten gesprochenen Orts- oder Straßennamens mit den vorgewählten Orts- oder Straßennamen der ersten Ortsliste vorgesehen ist oder
- zur sequentiellen Suche des sprachlich eingegebenen Orts- oder Straßennamens vom Anfang einer dritten Orts- oder Straßenliste vorgesehen ist, die eine Sortierung nach einem von dem Häufigkeitskriterium der zweiten Orts- oder Straßenliste unterschiedlichen Häufigkeitskriterium aufweist.

6. Eingabesystem nach Anspruch 5,
**dadurch gekennzeichnet,**
**daß** die Steueranordnung (1) nach einem Suchvorgang in der ersten, zweiten oder dritten Ortsliste und während eines darauffolgenden Dialogs mit einem Benutzer zum Start eines weiteren Suchvorgangs vorgesehen ist.

7. Navigationssystem mit einer Eingabeanordnung (4) wenigstens für Orts- und/oder Straßennamen, mit einer wenigstens eine Orts- und/oder Straßenliste enthaltenen Datenquellenanordnung (3) und mit einer Steueranordnung (1), die zur Suche von über die Eingabeanordnung (4) eingegebenen Orts- oder Straßennamen in einer Ortsoder Straßenliste der Datenquellenanordnung (3) vorgesehen ist,
**dadurch gekennzeichnet,**
**daß** die Datenquellenanordnung (3) außer einer ersten Orts- und/oder Straßenliste mit alphabetisch sortierten Orts- und/oder Straßennamen wenigstens eine zweite Ortsund/oder Straßenliste mit nach einem Häufigkeitskriterium sortierten Orts- und/oder Straßennamen enthält,
**daß** die zweite Orts- und/oder Straßenlisten wenigstens einen Teil der Orts- und/oder Straßennamen der ersten Orts- und/oder Straßenliste enthalten,
**daß** die Eingabeanordnung (4) ein Spracheingabesystem (12, 13) enthält, welches zur Weiterleitung von Spracheingaben an die Steueranordnung (1) vorgesehen ist und
**daß** die Steueranordnung (1) zuerst zur sequentiellen Suche eines sprachlich eingegebenen Orts- oder Straßennamens vom Anfang der zweiten Orts- oder Straßenliste vorgesehen ist.

## Claims

1. An input system for at least location and/or street names, including an input device (4), a data source arrangement (3) which contains at least one list of locations and/or streets, and a control device (1) which is arranged to search location or street names, entered via the input device (4), in a list of locations or streets in the data source arrangement (3),
**characterized in that**
the data source arrangement (3) contains, in addition to a first list of locations and/or streets with alphabetically sorted names of locations and/or streets, at least one second list of locations and/or streets with names of locations and/or streets sorted on the basis of a frequency criterion,
that the second lists of locations and/or streets contain at least a part of the names of locations and/or streets of the first list of locations and/or streets,
that the input device (4) includes a speech input system (12, 13) which is arranged to conduct entries in speech to the control device (1), and
that the control device (1) is arranged to conduct first of all a sequential search for a name of a location or a street, entered in the form of speech, as from the beginning of the second list of locations or streets.

2. An input system as claimed in Claim 1,
**characterized in that**
the frequency criterion used for the second list of locations or streets is the number of inhabitants or the empirically determined search frequency for the locations or streets, or the suffix or the prefix or the number of syllables or a property of a location name or street name.

3. An input system as claimed in Claim 1,
**characterized in that**,
after the input of a location name or street name in the form of speech, the control device (1) is arranged to search the recognized spoken location or street name in a first sub-set of the second list of locations or streets and is arranged to output that location or street name contained in the first sub-set which is most similar to the recognized spoken location or street name, and that the first sub-set contains the location or street names stated each time at the beginning of the second list of locations or streets, the number of location or street names contained in the second sub-set being such that a search takes place practically in real time.

4. An input system as claimed in Claim 3,
**characterized in that**,
when the location or street name searched is not contained in the first sub-set, the control device (1) is arranged to search a location or street name in a second sub-set of the second list of locations or streets and to output at least one location or street name which is most similar to the recognized spoken location or street name, and
that the second sub-set contains each time at least a part of the location or street names of the second list of locations or streets minus the location or street names of the first sub-set.

5. An input system as claimed in Claim 4,
**characterized in that**,
when the location or street name searched is not present in the second sub-set of the second list of locations or streets, the control device (1)
- is arranged to preselect, after the spoken input of given letters of the location or street name searched, a number of location or street names from the first list of locations or streets and to compare the recognized spoken location or street name with the preselected location or street names of the first list of locations or streets, or
- is arranged to perform a sequential search of the location or street name, entered in the form of speech, as from the beginning of a third list of locations or streets which is sorted in conformity with a frequency criterion other than the frequency criterion used for the second list of locations or streets.

6. An input system as claimed in Claim 5,
**characterized in that**
the control device (1) is arranged to start a further search operation after a search operation in the first, the second or the third list of locations or streets and during a subsequent dialog with a user.

7. A navigation system which includes an input device (4) for at least location and/or street names, a data source arrangement (3) which contains at least one list of locations and/or streets, and a control device (1) which is arranged to search location or street names, entered via the input device (4), in a list of locations or streets in the data source arrangement (3),
**characterized in that**
the data source arrangement (3) contains, in addition to a first list of locations and/or streets with alphabetically sorted names of locations and/or streets, at least one second list of locations and/or streets with names of locations and/or streets sorted on the basis of a frequency criterion,
that the second lists of locations and/or streets contain at least a part of the names of locations and/or streets of the first list of locations and/or streets,
that the input device (4) includes a speech input system (12, 13) which is arranged to conduct entries in speech to the control device (1), and
that the control device (1) is arranged to conduct first of all a sequential search for a name of a location or a street, entered in the form of speech, as from the beginning of the second list of locations or streets.

## Revendications

1. Système d'introduction au moins pour des noms de localités et/ou de rues avec un dispositif d'introduction (4), avec un dispositif de source de données (3) contenant au moins une liste de localités et/ou de rues et avec un dispositif de commande (1) qui est prévu pour la recherche de noms de localités ou de rues introduits par l'intermédiaire du dispositif d'introduction (4) dans une liste de localités ou de rues du dispositif de source de données (3), **caractérisé en ce**
**que** le dispositif de source de données (3) contient, outre une première liste de localités et/ou de rues avec des noms de localités et/ou de rues triés alphabétiquement, au moins une deuxième liste de localités et/ou de rues avec des noms de localités et/ou de rues triés selon un critère de fréquence,
**que** les deuxièmes listes de localités et/ou de rues contiennent au moins une partie des noms de localités et/ou de rues de la première liste de localités et/ou de rues;
**que** le dispositif d'introduction (4) contient un système d'introduction vocale (12, 13) qui est prévu pour la transmission d'introductions vocales au dispositif de commande (1) et que le dispositif de commande (1) est d'abord prévu pour la recherche séquentielle d'un nom de localité ou de rue introduit vocalement au début de la deuxième liste de localités ou de rues.

2. Système d'introduction selon la revendication 1, **caractérisé en ce que** le nombre d'habitants ou la fréquence de recherche des localités ou rues déterminée par des valeurs d'expérience ou le suffixe ou le préfixe ou le nombre de syllabes ou une propriété d'un nom de localité ou de rue sont prévus comme critère de fréquence dans la deuxième liste de localités ou de rues.

3. Système d'introduction selon la revendication 1, **caractérisé en ce qu'**après l'introduction vocale d'un nom de localité ou de rue, le dispositif de commande 1) est prévu pour la recherche du nom de localité ou de rue prononcé reconnu dans une première quantité partielle de la deuxième liste de localités ou de rues et pour la sortie du nom de localité ou de rue contenu dans la première quantité partielle qui est la plus proche du nom de localité ou de rue prononcé reconnu et que la première quantité partielle contient le nom de localité ou de rue respectivement contenu au début de la deuxième liste de localités ou de rues et le nombre des noms de localités ou de rues contenus dans la première quantité partielle est choisi de telle sorte qu'une recherche soit effectuée pratiquement en temps réel.

4. Système d'introduction selon la revendication 3, **caractérisé en ce que**, lorsque le nom de localité ou de rue recherché n'est pas contenu dans la première quantité partielle, le dispositif de commande (1) est prévu pour la recherche de la localité ou de rue dans une deuxième quantité partielle de la deuxième liste de localités ou de rues et pour la sortie d'au moins un nom de localité ou de rue qui est le plus proche du nom de localité ou de rue prononcé reconnu et que la deuxième quantité partielle contient respectivement au moins une partie des noms de localité ou de rue de la deuxième liste de localités ou de rues moins les noms de localités ou de rues de la première quantité partielle.

5. Système d'introduction selon la revendication 4,
**caractérisé en ce**
**que**, lorsque le nom de localité ou de rue recherché n'est pas contenu dans la deuxième quantité partielle de la deuxième liste de localités ou de rues, le dispositif de commande (1) :
- est prévu après l'introduction vocale de certaines lettres du nom de localité ou de rue recherché pour la présélection d'un nombre de noms de localités ou de rues à partir de la première liste de localités ou de rues et pour la comparaison du nom de localité ou de rue prononcé reconnu avec le nom de localité ou de rue présélectionné de la première liste de localités ou
- est prévu pour la recherche séquentielle du nom de localité ou de rue introduit vocalement au début d'une troisième liste de localités ou de rues qui présente un tri selon un critère de fréquence différent du critère de fréquence de la deuxième liste de localités ou de rues.

6. Système d'introduction selon la revendication 5, **caractérisé en ce**
**que** le dispositif de commande (1) est prévu après une procédure de recherche dans les première, deuxième ou troisième listes de localités et pendant un dialogue suivant avec un utilisateur, pour le lancement d'une nouvelle procédure de recherche.

7. Système de navigation avec un dispositif d'introduction (4) au moins pour des noms de localités et/ou de rues, avec un dispositif de source de données (3) contenant au moins une liste de localités et/ou de rues, avec un dispositif de commande (1) qui est prévu pour la recherche de noms de localités ou de rues introduits par l'intermédiaire du dispositif d'introduction (4) dans une liste de localités ou de rues du dispositif de source de données (3), **caractérisé en ce**
**qu'**hormis une première liste de localités et/ou de rues avec des noms de localités et/ou de rues triés alphabétiquement, le dispositif de source de données (3) contient au moins une deuxième liste de localités et/ou de rues avec les noms de localités et/ou de rues triés selon des critères de fréquence,
**que** les deuxièmes listes de localités et/ou de rues contiennent au moins une partie des noms de localités et/ou de rues de la première liste de localités et/ou de rues,
**que** le dispositif d'introduction (4) contient un système d'introduction vocale (12, 13) qui est prévu pour la transmission d'introductions vocales au dispositif de commande (1) et que le dispositif de commande (1) est d'abord prévu pour la recherche séquentielle d'un nom de localité ou de rue introduit vocalement au début de la deuxième liste de localités ou de rues.
